# EUROPEAN PATENT SPECIFICATION

(11) **EP 0 689 929 B1**
(45) Date of publication and mention of the grant of the patent: **30.09.1998**
(21) Application number: 94903087.8
(22) Date of filing: 28.12.1993
(51) Int. Cl.: B29C 65/02, B65D 81/07

(54) **APPARATUS FOR MANUFACTURING A CUSHION MATERIAL SHEET HAVING EXPANDABLE AIR BAGS PROVIDED CONTINUOUSLY**
VORRICHTUNG ZUR KONTINUIERLICHEN HERSTELLUNG VON EINER POLSTERFOLIE MIT AUFBLASBAREN LUFTSÄCKEN
APPAREIL SERVANT A LA FABRICATION D'UNE FEUILLE DE MATERIAU D'AMORTISSEMENT COMPRENANT DES COUSSINS D'AIR GONFLABLES PRODUITS A LA CHAINE

(43) Date of publication of application: 03.01.1996
(73) Proprietor: Shinwa Corporation, Kobe-shi, Hyogo 658 (JP)
(72) Inventor: MITSUTA, Teruo, Chiba-shi, Chiba 260 (JP); SHIGEZANE, Takayuki, Chiba-shi, Chiba 260 (JP)
(74) Representative: Schieschke, Klaus, Dipl.-Ing.
(86) International application number: JP9301914
(87) International publication number: WO9518008

(56) References cited:
- WO-A-93/04947
- JP-A- 1 045 277
- JP-A- 4 154 570
- JP-A- 4 215 978
- US-A- 1 595 006
- US-A- 2 440 664
- US-A- 4 753 629
- PATENT ABSTRACTS OF JAPAN vol. 016, no. 446 (M-1311), 17 September 1992 & JP-A-04 154571 (SHINWA KOOPOREESHIYON:KK), 27 May 1992,

## Description

This invention relates to an apparatus for producing a cushioning sheet material having a series of inflatable air bags, according to claim 1 or 2.

Prior art refers to a cushioning sheet material including a plurality of individually separated air bags through which an air-blowing tube having a self-sealable valve is extended (JP 4154571, Japanese Utility Model Application HEISEI-01-120,288, Japanese Patent Application HEISEI-2-270115, Japanese Patent Application HEISEI-02-410,577, WO-A-9304947).

Each of the cushioning sheets materials disclosed in the above-mentioned documents is produced by preliminarily forming an air-blowing tube having self-sealable valves, inserting the air-blowing tube between two sheets of film having a relatively wide width for forming an outer bag of air bags, then heat-sealing the two film sheets with each other in the longitudinal direction and in the transverse direction.

That is to say, the cushioning sheet material has been produced by at least two separate or discontinuous stages of producing an air-blowing tube and producing an outer bag. In particular, the cushioning sheet material disclosed in each of Japanese Patent Applications Nos. HEISEI-02-270,115 and HEISEI-02-410,577 has been produced by placing two relatively wide film sheets one on top another, and heat-sealing the opposite side edges of one film sheet to the corresponding opposite side edges of the other film sheet, while leaving non-welded portion in one side edges of the film sheets as a self-sealable valve.

Additional self-sealable valves are formed within the inside of the relatively narrow film sheets by means of heat-seal operation so as to independently form an air-blowing tube. In an separate process, the air-blowing tube is placed between the relatively wide film sheets for forming air bags. The film sheets are heat-sealed in the longitudinal direction and the transverse direction, whereby a cushioning sheet material having a series of air bags may be produced.

In order to produce an air-blowing tube, a line is needed in which two film sheets are withdrawn and extended from their respective rolls, and heat-sealed to form an air-blowing tube. This requires considerable working space.

It is also required to wind up the formed tube around a roll in preparation for succeeding process. This also requires a space for temporarily storing the wound-up tube. The outer bag is produced by withdrawing and extending two film sheets for forming a outer bag from respective rolls.

The air-blowing tube, having been formed in the above manner, is withdrawn and placed between the two film sheets. The film sheets, together with the air-blowing tube, are transferred or advanced, and heat-sealed along the side edges of the film sheets and along longitudinally spaced transverse lines. This also requires a broad working space. Furthermore, redundant space and operation are required in the process of forming the air-blowing tube and the process for forming the air bags, thus causing less efficiency of operation.

Further prior art is a method for making lap-welded articles from thermoplastic films, using a slip-sheet. This sheet is centrally disposed to prevent one lap joint from sticking to the other (US-A-2 440 664)

Accordingly, it is the object of the invention to provide an apparatus for producing an inflatable and self-sealable cushioning sheet material which may reduce undue working space, which may obviate repetitive operations, and which may produce a cushioning sheet material having quality at least the same as that of prior art cushioning sheet material in a series of continuous steps.

The invention also aims at obviation of surplus material and working operation, together with inconvenience of heat shrinkage, when the air-blowing tube is preferably formed from polyethylene film.

These problems are solved according to the characterizing parts of independent claims 1 and 2

In order to save on undue working space, the formation of an air-blowing tube and the formation of outer bag (defining individual air bags) through which the air-blowing tube is extended are simultaneously performed by a series of continuous processes. Specifically, two film sheets for forming an air-blowing tube are withdrawn from their respective rolls, while, at the same time, two film sheets for forming an outer bag (defining air bags) are withdrawn from their respective rolls. A non-weldable sheet is placed on the upper surface of one of the film sheets for forming an air-blowing tube and on the lower surface of the other of the film sheets for forming an air-blowing tube. The film sheets for forming an outer bag are placed on the film sheets for forming an air-blowing tube through a respective non-weldable sheet. The film sheets for forming an air-blowing tube and the film sheets for forming an outer bag are simultaneously advanced. The film sheets for forming an air-blowing tube are heat-sealed with each other through the film sheets for forming an outer bag by means of a first mold, so as to produce an air-blowing tube having self-sealable valves. Then, the opposite side edges of the air bag are heat-sealed with each other by means of a second mold so as to form a flattened cylindrical body. One side edge of the air-blowing tube is inserted into one side edge of the cylindrical body. The cylindrical air bag is heat-sealed by means of a third mold through the cylindrical air bag along a pair of transverse lines at a predetermined longitudinal Interval. Thus, a series of air bags being individually separated and having an air-blowing tube extending one end to the other end of the series of air bags may be produced in a single step of process.

In accordance with the apparatus of the invention, the air-blowing tube, when completed, is already bonded to the outer bag. Thus, surplus operation in which the tube is singly wound up and accommodated is completely obviated. The space required for performing such surplus operation is not necessary at all. Redundant operation is also obviated, since the air-blowing tube is initially supplied, as film sheets, to the film sheets for forming the outer bag.

In accordance with the apparatus of the invention, production of the air-blowing tube and the production of a series of air bags in which the air-blowing tube is placed are performed in a single continuous production line. This greatly contributes to saving of working space, simplification of operation process, effective productivity, and cost savings.

In accordance with the apparatus of the invention, non-weldable sheets are placed between the air-blowing tube and the air-bag film sheets when the self-sealable valves are formed. The non-weldable sheets also serves as a thermal buffer sheet so that heat shrinkage of the air-blowing tube may be prevented. Thus, a cushioning sheet material of a high dimensional accuracy may be produced. Due to the operational advantage inherent to the non-weldable sheets, application of non-weldable printing ink to the inner surface of the air-bag film sheets or the outer surface of the air-blowing tube Is not required, which application was needed in order to avoid heat welding between the inner surface of the air-bag film sheets and the outer surface of the air-blowing tube when the self-sealable valves are formed in the first mold. Accordingly, roughing operation by means of grinding, having been performed relative to the above-mentioned inner surface and outer surface in order to increase adherence of printing ink thereto, may be obviated. This also prevents the air-bag film sheets and the air-blowing tube from being reduced in its mechanical strength.

### BRIEF DESCRIPTION OF THE DRAWINGS

Fig. 1 is a diagrammatic side elevational view showing an apparatus for producing a cushioning sheet according to a first embodiment of the invention;
Fig. 2 is a perspective view showing films and a non-welded sheet at a mold position;
Fig. 3 is a plan view of Fig. 2;
Fig. 4 is a plan view of a film showing the initial stage throughto the final stage of forming an air bag;
Fig. 5 is a plan view of a film showing a pattern in which printing ink is applied;
Fig. 6 is a cross-sectional view of an air bag during inflation;
Fig. 7 is a cross-sectional view showing an air bag after completion of inflation;
Fig. 8 is a perspective view of an air bag which has been inflated;
Fig. 9 is a diagrammatic side elevational view showing an apparatus for producing a cushioning sheet according to a second embodiment of the invention;
Fig. 10 is a plan view of an outer film bag having a width twice that of a single air bag, the outer film bag adapted to be separated Into two air bags; and
Fig. 11 is a diagrammatic perspective view showing a method for separating an outer film bag having a width twice that of a single air bag into two air bags.

### BEST MODE FOR CARRYING OUT THE INVENTION

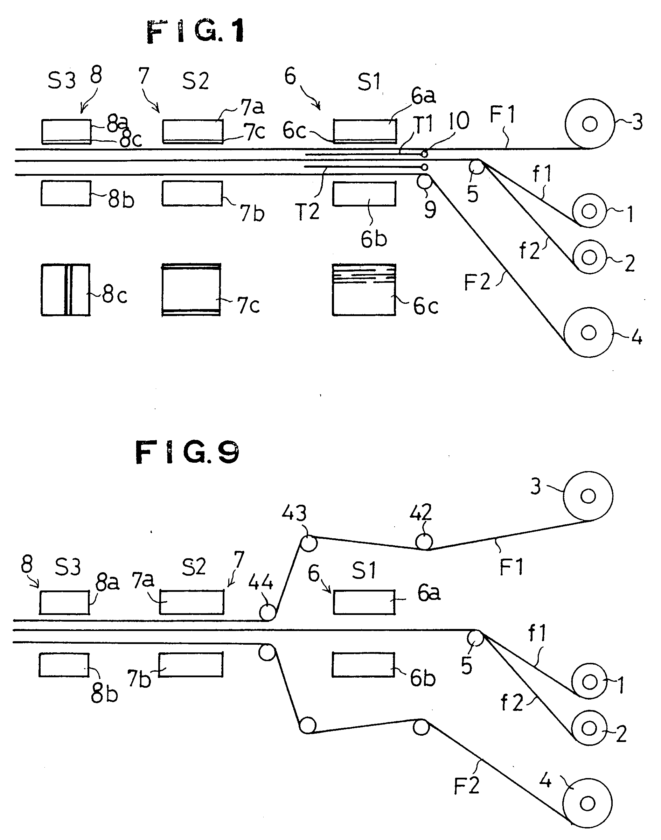

Preferred embodiments of an apparatus according to the invention will be explained in detail below with reference to the attached drawings. Fig. 1 is a side elevational view of an apparatus of the invention. Narrower films f1 and f2 for forming a blowing tube (referred to as "tube films" hereinbelow) are withdrawn from a pair of rolls 1 and 2, respectively, in the horizontal direction. The pair of roll 1 and 2 are spaced apart from one another in the vertical direction. Preferably, the films f1 and f2 are formed from a polyethylene material having a relatively low heat seal temperature. The films f1 and f2 are pulled by a guide roller 5 with their opposite side edges or longitudinal edges aligned with each other so that they are transferred or advanced as a single sheet of film. Wider films F1 and F2 for forming an air bag (referred to "air-bag films" hereinbelow) are withdrawn from a roll 3 disposed above the roll 1 and roll 4 disposed below the roll 2, respectively. Preferably, the films F1 and F2 are formed from a laminated film of a nylon material and a polyethylene material having a relatively high heat seal temperature. It is noted, however, that another materials such as polyethylene telephtalate (PET) or polypropylene (PP) may be used for the films f1 and f2 and F1 and F2. One of the wider films F1 is withdrawn directly from the roll 3 in the horizontal direction, while the other wider film F2 is withdrawn from the roll 4 through a guide roller 9 in the horizontal direction. One side edge or longitudinal edge of each of the wider film F1 and F2 is aligned with one side edge or longitudinal edge of each of the films f1 and f2 for a blowing tube disposed between the films F1 and F2. Although the films F1 and F2 and f1 and f2 are shown to be slightly separated from one another in the drawings, they, in reality, are laid one on top another at the point of the guide roller 9 and advanced toward the left in Fig. 1 as a single sheet of film.

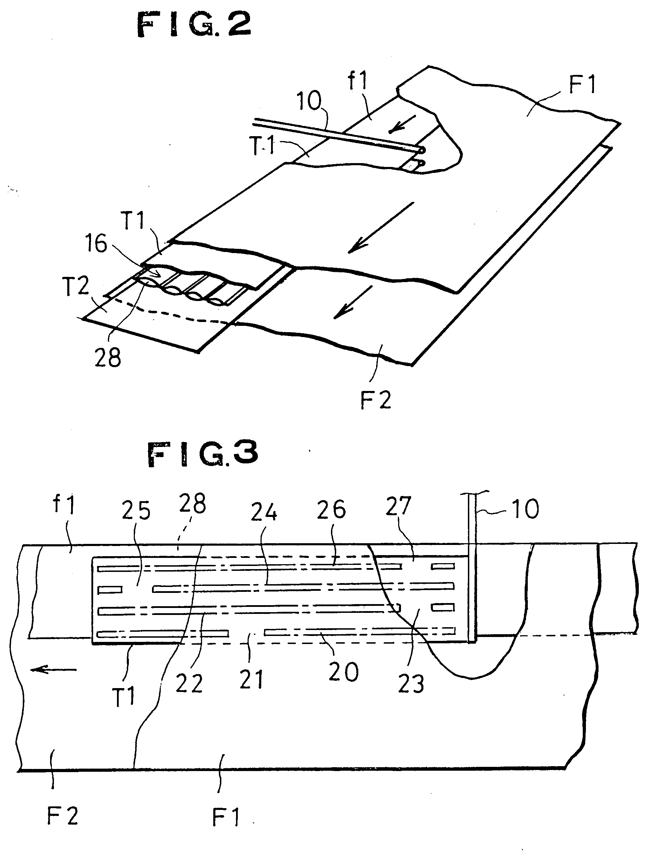

The above mentioned tube films f1 and f2, together with air-bag films F1 and F2, constitute a cushioning sheet material including an air blowing tube and a plurality of air bags, as shown in Fig. 2, for example.

First, second and third operation stations S1, S2 and S3 are serially disposed in the direction in which the films are advanced. The first operation station S1 is provided for forming self-sealable valves in the blowing tube by means of a heat-sealing operation. The second operation station S2 is provided for bonding the opposite side edges of an air bag together in the longitudinal direction by means of a heat-sealing operation. The third operation station S3 is provided for bonding the air bag, by means of a heat-sealing operation, in a direction transverse to the longitudinal direction at predetermined longitudinal intervals.

Specifically, the first operation station S1 is provided with a first heat-seal device 6 for forming self-sealable valves in the films f1 and f2 for a blowing tube. The first heat-seal device 6 includes an upper member 6a. A first mold 6c is attached to the lower surface of the upper member 6a. The first mold 6c has a predetermined pattern of self-sealable valves to be formed in the blowing tube. The upper member 6a is intermittently moved up and down relative to a lower, retainer member 6b. Thus, a predetermined heat-seal pattern is formed in the tube films f1 and f2 through the air bag film F1. More particularly, the predetermined pattern of self-sealable valves includes a plurality of substantially continuous protrusions arranged in parallel with one another. Each of the substantially continuous protrusions is formed with a notch for allowing air flow at a different position. Thus, a staggered air passage is formed between the tube films f1 and f2.

Non-weldable sheets T1 and T2 are fixedly disposed between the upper member 6a and the lower, retainer member 6b. The non-weldable sheet T1 is disposed between the film f1 for forming an air-blowing tube (hereinafter, referred to as a "tube film") and the film F1 for forming an air bag (hereinafter, referred to as a "air-bag film"). The non-weldable sheet T2 is disposed between the tube film f2 and the air-bag film F2. The non-weldable sheets T1 and T2 are preferably formed from a sheet of Teflon (trade name). The non-weldable sheets T1 and T2 have a width equal to or larger than that of the films f1 and f2, and a length equal to or larger than that of the upper member 6a and the lower, retainer member 6b. The non-weldable sheets T1 and T2 are supported at their upstream ends (right-hand ends in Fig. 1) by a horizontal bar 10. The downstream ends (left-hand ends in Fig. 1) of the non-weldable sheets T1 and T2 are freely supported between the films f1, f2, F3 and F4.

The second operation station S2 is provided with a second heat-seal device 7 for bonding the opposite side edges or longitudinal edges of the air bag by means of a heat-seal operation. The second heat-seal device 7 includes an upper member 7a movable in the vertical direction and a lower, retainer member 7b. A second mold 7c is attached to the lower surface of the upper member 7a. The second mold 7c is formed with a pair of continuous protrusions, arranged in parallel with each other, for bonding the opposite side edges or longitudinal edges of the air bag.

The third operation station S3 is provided with a third heat-seal device 8 for bonding the air bag in the transverse direction at predetermined intervals in the longitudinal direction of the air bag. The third heat-seal device 8 includes an upper member 8a movable in the vertical direction and a lower, retainer member 8b. A third mold 8c is attached to the lower surface of the upper member 8a. The third mold 8c includes a single continuous protrusion for bonding, by means of a heat-seal operation, the air bag in the transverse direction.

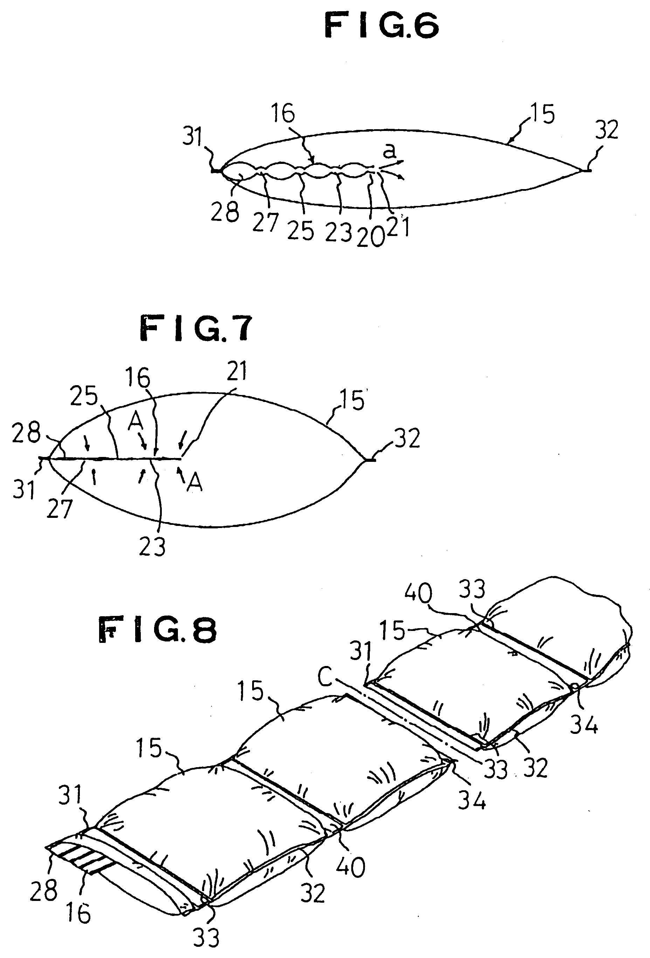

A device (not shown) for applying a quantity of non-weldable paint to the inner surface of the film f1 or f2 is disposed between the rolls 1 and 2 and roll 5. The non-weldable paint is applied to the inner surface of the film f1 or f2 so as to prevent a main air passage 28 of a air-blowing tube 17 from being closed or blocked when the air bag is heat-sealed in the transverse direction in the third operation station S3. Thus, the device for applying the non-weldable paint is adapted to continuously apply the non-weldable paint in the longitudinal direction, as shown by an elongated, shaded area in Fig. 5. Preferably, the non-weldable paint or ink may include varnish or other painting materials. Such painting materials are preferable, since the may present a flat and smooth surface when dried, which may reduce fluid friction of air to be blown into the main air passage 28.

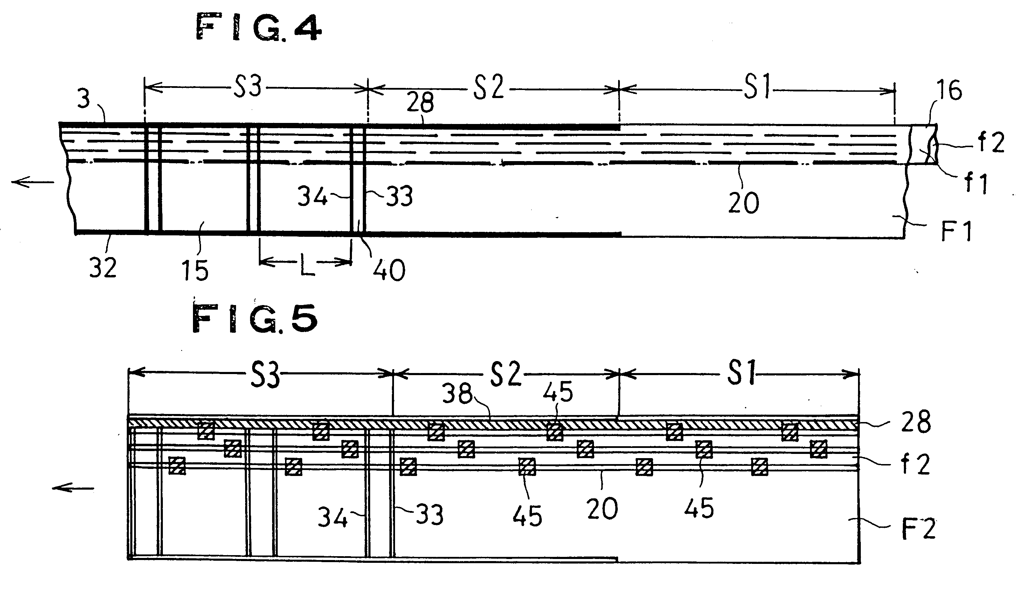

The treatment process of the first, second and third operation stations will be sequentially explained below. Fig. 4 shows a continuous length of the four film sheets f1 and f2 and F1 and F2 under treatment in each of the operation stations S1, S2 and S3, together with heat-seals formed thereon. For convenience of illustration, one end of each of the tube films f1 and f2 is protruded from the air-bag film F1 at the right-hand side of Fig. 4. At the first operation station S1, a predetermined pattern of self-sealable valves is applied to the films f1 and f2 through the overlying air-bag film F1. A typical pattern of self-sealable valves will be explained below with reference to Fig. 3. The pattern includes a discontinuous first seal 20 disposed at the side edges of the films f1 and f2 opposite to the aligned side edges of the films f1 and f2 and F1 and F2. The discontinuous first seal 20 includes a communication port (intermittent portion or notch) forming a non-welded portion or a first self-sealable valve 21. The pattern also includes a second seal 22 having a non-welded portion forming a second self-sealable valve 23. The pattern further includes a third seal 24 having a non-welded portion forming a third self-sealable valve 25. The pattern finally includes a fourth seal 26 having a non-welded portion forming a fourth self-sealable valve 27. It is preferable for the adjacent self-sealable valves 21, 23, 25 and 27 not to be aligned with each other, i. e., to be arranged to form a staggered passage from the main air passage 28 to the first self-sealable valve 21, in order to enhance the self-sealable function of the blowing tube when the air bag is inflated. In the illustrated embodiment, three seals (second to fourth seal), other than the first seal 20, are provided. It is noted, however, that the Invention is not limited to such a specific construction. One or two seals or four or more seals other than the first seal may be provided, as desired.

In the illustrated embodiment, the side edge of the cushioning sheet material opposite to the first seal 20, i. e., the side edge of the cushioning sheet material on which the side edges or longitudinal edges of the film f1, f2, F1 and F2 are aligned with one another, is not heat-sealed in the longitudinal direction at the first operation station. It is noted, however, that the mold member 6c in the first operation station S1 may also be provided with the heat-seal pattern of the mold member 7c in the second operation station. In this case, the first operation station also performs the process of the second operation station otherwise performed thereby. Thus, the second operation station may be obviated, so as to simplify the total processing operation.

At the second operation station S2, a first longitudinal heat-seal 31 and a second longitudinal heat-seal 32 are formed in the opposite side edges of the air-bag films F1 and F2. By this, the air-bag films F1 and F2 are bonded to form a bag-shaped configuration. At this time, one side edge of the air-blowing tube 16 is sealingly held by the first longitudinal heat-seal 31. The air-blowing tube 16 allows air flow through, in addition to the main air passage 28, the passage of a labyrinth or staggered configuration, thus completing the basic configuration of the air-blowing tube. Namely, the air-blowing tube 16 is formed simultaneously with the partial formation (formation of the longitudinal heat-seals) of the air bag (outer bag). By this, the process and the amount of operation, as well as working space, may be significantly reduced.

At the third operation station, a pair of transverse heat-seals 33, 34 are formed in the assembly of the air-bag films F1 and F2 and the air-blowing tube 16 integral therewith at each predetermined longitudinal interval L. The heat and pressure exerted during formation of the transverse heat-seals also Influence the tube films f1 and f2, so that they are welded at the portions other than the portion of the main air passage 28 which has been applied with non-weldable paint 38. The thus formed individual air bags 15 are in fluid communication with one another through the main air passage 28 of the air-blowing tube 16, but separated by the respective set of self-sealable valves 21, 23, 25 and 27. This construction is advantageous in that air may be supplied into the individual air bags 15 through the single main air passage 28. It is also noted that, even when one or more of the inflated individual air bags 15 are broken, any air leakage from the remaining air bags 15 may be effectively prevented.

A single transverse heat-seal, in place of the pair of transverse heat-seals 33, 34, may be formed at the predetermined interval L. It is preferable, however, that the pair of transverse heat-seals 33, 34 are formed to leave a connection part 40 therebetween, since the plural air bags may be separated at any connection part 40. The length L of a single air bag may be determined as desired depending upon a particular application.

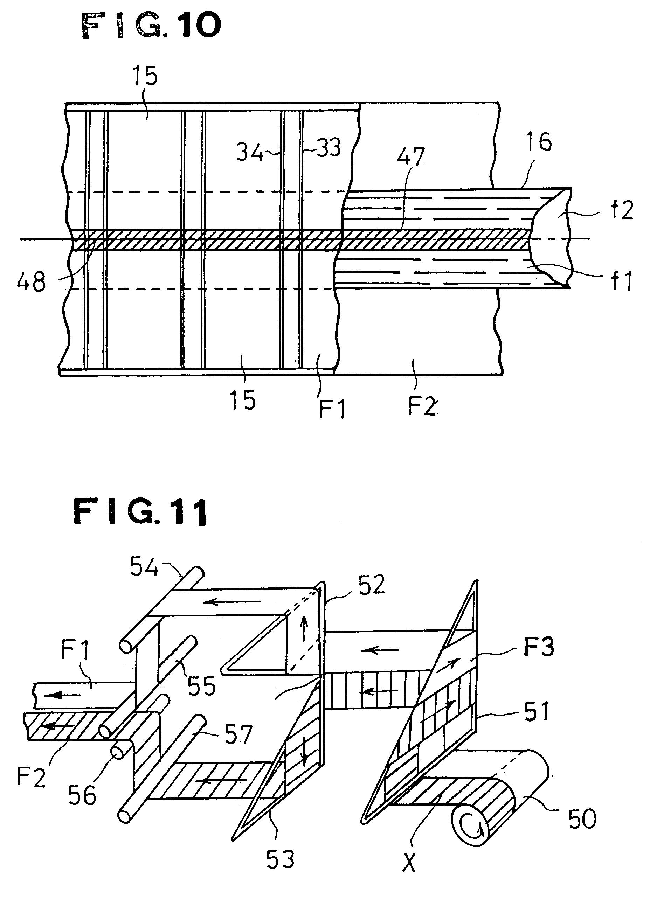

Figs. 6 is a diagrammatic view, in section, of the air bag, produced in accordance with the method of the invention, being inflated with air. Fig. 7 is a diagrammatic view, in section, of the inflated air bag in order to show the function of the self-sealable valves of the air-blowing tube. When a quantity of air is supplied from an air compressor, for example, through one end of the air blowing tube 16, the main air passage 28 is expanded as shown in Fig. 6 so as to cause the self-sealable valve 27 to be opened. Thus, the air passage of a labyrinth configuration is expanded so as to cause the self-sealable valves 25 and 23 to be opened. Consequently, a quantity of air is supplied into the air bag 15 through the self-sealable valve 21 of the first seal 20. Although, for convenience of illustration, the self-sealable valves 27, 25, 23 and 21 are shown to be arranged in a linear fashion, they in actual are arranged in a staggered fashion as shown in Figs. 3 and 4.

When the air bag 15 is inflated to a predetermined degree, air-blowing operation is stopped. By this, the air-blowing tube 16 is collapsed or flattened due to the air pressure A within the air bag 15, as shown in Fig. 7. Thus, the self-sealable valves 21, 23, 25 and 27, the labyrinth passage therebetween, and the main air passage 28 are collapsed into a flattened form, so as to prevent air leakage from the air bag 15.

Fig. 8 illustrates a series of air bags 15 supplied with air and maintained in their individual inflated condition. Each of the air bags 15 when supplied with air forms a separate, inflated body defined by the longitudinal seals 31 and 32 and the transverse seals 33 and 34, since the main air passage 28 is closed due to the self-sealing function of the blowing tube 16. The series of air bags 15 may be inserted, for example, into a free space between articles within a container as a cushioning material. In such a case, and when one of the air bags 15 is broken, the remaining air bags 15 will be able to maintain their inflated condition. Usually, the cushioning sheet material according to the invention is conveniently inserted into a free space between an article and a container therefor in a flattened form. Then, the cushioning material is supplied with air to be inflated. In such a case, the independence of the air bags 15 also brings about advantages. That is to say, the air bags located in a relatively big air-space become inflated significantly, while the air bags located in a relatively small air-space become Inflated less significantly. Namely, the air bags may be independently inflated to its limit depending upon the size of the air-space in which they are located and maintained at their inflated form.

Similarly, and when the connection part 40 between the adjacent air bags 15 is severed, for example, along line C in Fig. 8, the air bags on opposite sides of the connection part 40 may be maintained in their inflated form.

One embodiment of the Invention has been explained in the above. It is noted, however, that the invention should not be limited to such a specific form, but may take several variations. For example, the air-bag films F1 and F2 may be extended around three guide rollers 42, 43 and 44, In place of passing thorough the first operation station S1, and directly introduced into a heat-seal device 7 in the second operation station S2, as shown in Fig. 9. In this case, the non-weldable sheets T1 and T2 provided for preventing welding between the air-bag films F1 and F2 and the air-blowing tube 16 in the first operation station S1 may be obviated.

When the first mold 6c is used, only one pattern of self-sealable valves is formed. Thus, a mold (not shown) having a plurality of continuous protrusions with no notches for heating purpose may be used. In this case, a pattern of deposits of non-weldable paint 45 may be applied to the inner surface of the tube film f1 or f2. The deposits of non-weldable paint are applied at positions on the inner surface of the film f1 or f2 against which the heating protrusions of the mold are to be urged. In this manner, it is possible to form self-sealable valves of different sizes at different positions by simply changing the pattern of deposits of non-weldable paint 45, without changing the first mold. Thus, the type of the air bags may be changed at low cost.

As shown in Fig. 10, two continuous length of cushioning sheet material may be produced simultaneously. In this case, air-bag films F1 and F2 of an increased width are used. An air-blowing tube 16 is disposed between the air-bag films F1 and F2 along the longitudinal center line thereof. A heat-seal 47 is formed along the longitudinal center line of the air-blowing tube 16. A plurality of parallel heat seals are formed on the opposite sides of the heat seal 47 of the air-blowing tube 16 so as to form a plurality of self-sealable valves. If desired, the central portion 48 of the heat seal 47 may be cut or severed along the longitudinal center line thereof for example by a cutter following the third operation station S3. Thus, production rate of the air bags 15 may be doubled. The air bags of different sizes may be also produced. In Fig. 10, only one air-blowing tube 16 is placed between the air-bag films F1 and F2. It is noted, however, that two or more air-blowing tubes may be placed between the air-bag films F1 and F2. In such a case, three or more times of the production rate of the air bags may be obtained. Sizes of the air bags may be increased accordingly.

As shown in Figs. 1 through 9, two rolls 3 and 4 for the air-bag films F1 and F2 are used. It is noted, however, that the rolls 3 and 4 may be replaced with a single roll 50 of an increased width, as shown In Fig. 11. Air-bag film F3 of an increased width (one half of the width of the film is shaded with transverse lines X) is withdrawn from the roll 50 and transferred through a triangular frame 51 to triangular frames 52 and 53. The film F3 is cut or severed along the longitudinal center line thereof by means of a cutter 58 (only the position of the cutter is shown and its detailed configuration is not shown in Fig. 11) disposed between the triangular frames 52 and 53, whereby air-bag films F1 and F2 are formed. The air-bag films F1 and F2 are extended around plural guide rollers 54 and 55, and 56 and 57, respectively, and transferred to the first operation station S1. The above construction may be equally applied to the tube films. Accordingly, the means for supplying the tube films (relatively narrow film sheets) and the means for supplying the air-bag films (relatively wide film sheets) recited in the appended Claims should be broadly interpreted in the above sense.

## Claims

1. Apparatus for producing a cushioning sheet material, said cushioning sheet material including a plurality of inflatable air bags (15) which are individually separated and normally maintained in a flattened state and an air-blowing tube (16) extending through the air bags (15), said apparatus comprising:
a) means for supplying two sheets of tube film (f1, f2) having a relatively narrow width with the opposite side edges of one of the two sheets of tube film (f1, f2) being aligned with the corresponding opposite side edges of the other of the two sheets of tube film;
b) means for supplying a sheet of air-bag film (F1, F2) having a relatively wide width onto the upper surface of one of the two sheets of tube film (f1, f2) and onto the lower surface of the other of the two sheets of tube film with one side edge of each of the sheets of air-bag film (F1, F2) being aligned with one side edge of each of the sheets of tube film;
c) a plurality of molds (6, 7, 8) disposed along the supply passage for the sheets of tube film (f1, f2) and the sheets of air-bag film (F1, F2), said molds (6, 7, 8) being arranged in series from the upstream side to the downstream side of the supply passage including;
i) a first mold (6) for forming by means of heat-sealing operation, in the air-blowing tube, a main air passage (28) continuously extending through the plural air bags (15), and self-sealable valves (21, 23, 25, 27) disposed between the main air passage (28) and the individual air bags (15);
ii) a second mold (7) for bonding, by means of heat-sealing operation, the corresponding opposite side edges of each of the sheets of air-bag film in the longitudinal direction; and
iii) a third mold (8) for bonding, by means of heat-sealing operation, the sheets of air-bag film in the transverse direction at predetermined intervals along the longitudinal direction;
characterized in that
non-weldable sheets (T1, T2) are disposed adjacent to the first mold (6) and inserted between the sheets of tube film (f1, f2) and the sheets of air-bag film (F1, F2); and
that means are disposed between the means for supplying the sheets of tube film (f1, f2) and the first mold (6), for applying non-weldable paint on the inner surface of at least one of the sheets of tube film (f1, f2) corresponding to the main air passage (28), so that the main air passage (28) is not blocked by heat-press operation of the third mold (8).

2. Apparatus for producing a cushioning sheet material, said cushioning sheet material including a plurality of inflatable air bags (15) which are individually separated and normally maintained in a flattended state and an air-blowing tube (16) extending through the air bags (15), said apparatus comprising:
a) means for supplying two sheets of tube film (f1, f2) having a relatively narrow width with the opposite side edges of one of the two sheets of tube film being aligned with the corresponding opposite side edges of the other of the two sheets of tube film;
b) means for supplying a sheet of air-bag film having a relatively wide width onto the upper surface of one of the two sheets of tube film and onto the lower surface of the other of the two sheets of tube film with one side edge of each of the sheets of air-bag film being aligned with one side edge of each of the sheets of tube film; and
c) a plurality of molds (6, 7, 8)
characterized in that
i) a first mold (6) is disposed at an intermediate point of supply passage for the sheets of tube film (f1, f2) at which intermediate point the sheets of tube film do not meet the sheets of air-bag film (F1, F2), for forming by means of heat-sealing operation, in the air-blowing tube (16) constituted by the sheets of tube film (f1, f2), a main air passage (28) continuously extending through the plural air bags (15), and self-sealable valves (21, 23, 25, 27) disposed between the main air passage (28) and the individual air bags (15);
ii) a second mold (7) is disposed along the supply passage in which the sheets of tube film (f1, f2) and sheets of air-bag film (F1, F2) are met together and supplied, for bonding, by means of heat-sealing operation, the corresponding opposite side edges of each of the sheets of air-bag film in the longitudinal direction; and iii) a third mold (8) is disposed downstream of the second mold (7) for bonding, by means of heat-sealing operation, the sheets of air-bag film in the transverse direction at predetermined intervals along the longitudinal direction; and that
d) means are disposed between the means for supplying the sheets of tube film (f1, f2) and the first mold (6), for applying non-weldable paint on the inner surface of at least one of the sheets of tube film (f1, f2) corresponding to the main air passage (28), so that the main air passage (28) is not blocked by heat-press operation of the third mold.

3. Apparatus according to claim 1 or claim 2, characterized in that said self-sealable valves (21, 23, 25, 27) are formed by a heat-seal pattern including a plurality of protrusions arranged in parallel with one another and having a discontinued communication portion, and wherein the heat-seal pattern is formed by:
a first mold (6) having a plurality of continuous heating protrusions arranged in parallel with one another; and means for applying a layer of non-weldable paint to the inner surface of one of the sheets of tube film at areas corresponding to said plurality of protrusions, so that the layers extend through the areas in the transverse direction.

4. Apparatus according to claim 1, characterized in that said non-weldable sheet (T1, T2) is formed from Teflon.

5. Apparatus according to claim 1, characterized in that said tube film (f1, f2) is made of polyethylene, and said air-bag film (F1, F2) is made of a laminated film of Nylon and polyethylene.

## Patentansprüche

1. Vorrichtung zur Herstellung eines Polsterfolienmaterials, welches eine Vielzahl von aufblasbaren Luftkissen (15) aufweist, die einzeln voneinander getrennt sind und normalerweise in einem flachen Zustand verbleiben, sowie einen Lufteinblasschlauch (16), der sich durch die Luftkissen (15) erstreckt, wobei diese Vorrichtung besteht aus:
a) Mitteln für die Zufuhr zweier Bahnen von Film für den Schlauch (f1, f2), welche eine relativ geringe Breite haben, wobei die gegenüberliegenden Seitenkanten einer der beiden Bahnen des Films für den Schlauch (f1, f2) auf die entsprechenden, gegenüberliegenden Seitenkanten der anderen der beiden Bahnen des Films für den Schlauch ausgerichtet sind;
b) Mitteln für das Aufbringen einer Bahn von Film für die Luftkissen (F1, F2) mit relativ großer Breite auf die obere Fläche einer der beiden Bahnen des Films für den Schlauch (f1, f2) und auf die untere Fläche der anderen der beiden Bahnen des Films für den Schlauch, wobei eine Seitenkante jeder der Bahnen des Films für die Luftkissen (F1, F2) auf eine Seitenkante jeder der Bahnen des Films für den Schlauch ausgerichtet ist;
c) einer Vielzahl von Formen (6, 7, 8), die entlang des Zufuhrwegs für die Bahnen von Film für den Schlauch (f1, f2) und die Bahnen von Film für die Luftkissen (F1, F2) angeordnet sind, wobei die Formen (6, 7, 8) von der Seite stromaufwärts zu der Seite stromabwärts des Zufuhrwegs in Reihe angeordnet sind, mit;
i) einer ersten Form (6), um mittels eines Wärmeversiegelungsvorgangs in dem Lufteinblasschlauch eine Hauptluftleitung (28) zu bilden, die sich kontinuierlich durch die mehreren Luftkissen (15) erstreckt, sowie selbstabdichtende Ventile (21, 23, 25, 27), die zwischen der Hauptluftleitung (28) und den einzelnen Luftkissen (15) angeordnet sind;
ii) einer zweiten Form (7), um mittels eines Wärmeversiegelungsvorgangs die entsprechenden gegenüberliegenden Seitenkanten jeder der Bahnen des Films für die Luftkissen in Längsrichtung zu verbinden; und
iii) einer dritten Form (8), um mittels eines Wärmeversiegelungsvorgangs die Bahnen des Films für die Luftkissen in Querrichtung in vorherbestimmten Intervallen entlang der Längsrichtung zu verbinden;
dadurch gekennzeichnet, dass
nicht-schweißbare Bahnen (T1, T2) nahe der ersten Form (6) angeordnet und zwischen die Bahnen des Films für den Schlauch (f1, f2) und die Bahnen des Films für die Luftkissen (F1, F2) eingesetzt sind; und
dass zwischen den Mitteln für die Zufuhr der Bahnen des Films für den Schlauch (f1, f2) und der ersten Form (6) Mittel angeordnet sind, um nicht-schweißbare Farbe entsprechend der Hauptluftleitung (28) auf die Innenfläche mindestens einer der Bahnen von Film für den Schlauch (f1, f2) aufzutragen, damit die Hauptluftleitung (28) nicht durch die Wärmepressarbeit der dritten Form (8) blockiert wird.

2. Vorrichtung zur Herstellung eines Polsterfolienmaterials, welches eine Vielzahl von aufblasbaren Luftkissen (15) aufweist, die einzeln voneinander getrennt sind und normalerweise in einem flachen Zustand verbleiben, sowie einen Lufteinblasschlauch (16), der sich durch die Luftkissen (15) erstreckt, wobei diese Vorrichtung besteht aus:
a) Mitteln für die Zufuhr zweier Bahnen von Film für den Schlauch (f1, f2), welche eine relativ geringe Breite haben, wobei die gegenüberliegenden Seitenkanten einer der beiden Bahnen des Films für den Schlauch auf die entsprechenden, gegenüberliegenden Seitenkanten der anderen der beiden Bahnen von Film für den Schlauch ausgerichtet sind;
b) Mitteln für das Aufbringen einer Bahn von Film für die Luftkissen mit relativ großer Breite auf die obere Fläche einer der beiden Bahnen des Films für den Schlauch und auf die untere Fläche der anderen der beiden Bahnen des Films für den Schlauch, wobei eine Seitenkante jeder der Bahnen des Films für die Luftkissen auf eine Seitenkante jeder der Bahnen des Films für den Schlauch ausgerichtet ist; und
c) einer Vielzahl von Formen (6, 7, 8)
dadurch gekennzeichnet, dass
i) eine erste Form (6) an einer Zwischenstation des Zufuhrwegs für die Bahnen des Films für den Schlauch (f1, f2) angeordnet ist, an welcher die Bahnen des Films für den Schlauch nicht mit den Bahnen des Films für die Luftkissen (F1, F2) zusammentreffen, um mittels eines Wärmeversiegelungsvorgangs in dem Lufteinblasschlauch (16), der aus den Bahnen des Films für den Schlauch (f1, f2) gebildet wird, eine Hauptluftleitung (28) zu bilden, die sich kontinuierlich durch die mehreren Luftkissen (15) erstreckt, sowie selbstabdichtende Ventile (21, 23, 25, 27), die zwischen der Hauptluftleitung (28) und den einzelnen Luftkissen (15) angeordnet sind;
ii) eine zweite Form (7) entlang des Zufuhrwegs angeordnet ist, in dem die Bahnen des Films für den Schlauch (f1, f2) und Bahnen des Films für die Luftkissen (F1, F2) zusammengebracht und zugeführt werden, um mittels eines Wärmeversiegelungsvorgangs die entsprechenden gegenüberliegenden Seitenkanten jeder der Bahnen des Films für die Luftkissen in Längsrichtung zu verbinden; und
iii) eine dritte Form (8) stromabwärts der zweiten Form (7) angeordnet ist, um mittels eines Wärmeversiegelungsvorgangs die Bahnen des Films für die Luftkissen in Querrichtung in vorherbestimmten Intervallen entlang der Längsrichtung zu verbinden; und dass
d) zwischen den Mitteln für die Zufuhr der Bahnen des Films für den Schlauch (f1, f2) und der ersten Form (6) Mittel angeordnet sind, um nicht-schweißbare Farbe entsprechend der Hauptluftleitung (28) auf die Innenfläche mindestens einer der Bahnen von Film für den Schlauch (f1, f2) aufzutragen, damit die Hauptluftleitung (28) nicht durch die Wärmepressarbeit der dritten Form blockiert wird.

3. Vorrichtung nach Anspruch 1 oder Anspruch 2, dadurch gekennzeichnet, dass die selbstabdichtenden Ventile (21, 23, 25, 27) durch ein Wärmeversiegelungsmuster gebildet werden, das eine Vielzahl von Vorsprüngen aufweist, welche parallel zueinander angeordnet sind und einen unterbrochenen Verbindungsbereich aufweisen, wobei das Wärmeversiegelungsmuster gebildet wird durch:
eine erste Form (6) mit einer Vielzahl von fortlaufenden Erwärmungsvorsprüngen, die parallel zueinander angeordnet sind; und durch Mittel zum Auftragen einer Schicht aus nicht schweißbarer Farbe auf die Innenfläche einer der Bahnen des Films für den Schlauch an Bereichen, die der Vielzahl von Vorsprüngen entsprechen, so dass sich die Schichten in Querrichtung durch die Bereiche erstrecken.

4. Vorrichtung nach Anspruch 1, dadurch gekennzeichnet, dass die nicht schweißbare Bahn (T1, T2) aus Teflon besteht.

5. Vorrichtung nach Anspruch 1, dadurch gekennzeichnet, dass der Film für den Schlauch (f1, f2) aus Polyethylen besteht und der Film für die Luftkissen (F1, F2) aus einem laminierten Film aus Nylon und Polyethylen.

## Revendications

1. Dispositif pour produire un matériau d'amortissement en feuille, ledit matériau d'amortissement en feuille comportant plusieurs coussins d'air gonflables (15) qui sont individuellement séparés et normalement maintenus dans un état aplati et un tube de soufflage d'air (16) s'étendant a travers les coussins d'air (15), ledit dispositif comportant :
a) des moyens pour fournir deux feuilles de film pour tube (f1, f2) ayant une largeur relativement étroite, les bords latéraux opposés d'une des deux feuilles du film pour tube (f1, f2) étant alignés avec les bords latéraux opposés correspondant de l'autre des deux feuilles de film pour tube,
b) des moyens pour fournir une feuille de film pour coussin d'air (F1, F2) ayant une largeur relativement large sur la surface supérieure de l'une des deux feuilles pour tube (f1, f2) et sur la surface inférieure de l'autre des deux feuilles de film pour tube, un bord latéral de chacune des feuilles de film pour coussin d'air (F1, F2) étant aligné avec un bord latéral de chacune des feuilles de film pour tube,
c) plusieurs moules (6, 7, 8) disposés le long du passage de fourniture des feuilles de film pour tube (f1, f2) et des feuilles de film pour coussin d'air (F1, F2), lesdits moules (6, 7, 8) étant agencés en série à partir du côté amont vers le côté aval du passage d'alimentation comportant :
i) un premier moule (6) pour former par l'intermédiaire d'une opération de scellage à chaud, dans le tube de soufflage d'air, un passage d'air principal (28) s'étendant en continu à travers les plusieurs coussins d'air (15), et des vannes auto-scellables (21, 23, 25, 27) disposées entre le passage d'air principal (28) et les coussins d'air individuels (15),
ii) un second moule (7) pour fixer, par l'intermédiaire d'une opération de scellage à chaud, les bords latéraux opposés correspondants de chacune des feuilles de film pour coussin d'air, dans la direction longitudinale, et
iii) un troisième moule (8) pour fixer, par l'intermédiaire d'une opération de scellage à chaud, les feuilles de film pour coussin d'air dans la direction transversale selon des intervalles prédéterminés le long de la direction longitudinale,
caractérisé en ce que
des feuilles non-soudables (T1, T2) sont disposées adjacentes au premier moule (6) et insérées entre les feuilles de film pour tube (f1, f2) et les feuilles de film pour coussin d'air (F1, F2), et en ce que des moyens sont agencés entre les moyens pour fournir des feuilles de film pour tube (f1, f2), et le premier moule (6), pour appliquer une peinture non-soudable sur la surface intérieure d'au moins une des feuilles de film pour tube (f1, f2) en correspondance au passage d'air principal (28), de sorte que le passage d'air principal (28) n'est pas bloqué par une opération de chauffage sous pression du troisième moule (8).

2. Dispositif pour produire un matériau d'amortissement en feuille, ledit matériau d'amortissement en feuille comportant plusieurs coussins d'air gonflables (15) qui sont individuellement séparés et normalement maintenus dans un état aplati et un tube de soufflage d'air (16) s'étendant à travers les coussins d'air (15), ledit dispositif comportant :
a) des moyens pour fournir deux feuilles de film pour tube (f1, f2) ayant une largeur relativement étroite, les bords latéraux opposés de l'une des deux feuilles de film pour tube étant alignés avec les bords latéraux opposés correspondants de l'autre des deux feuilles de film pour tube,
b) des moyens pour fournir une feuille de film pour coussin d'air ayant une largeur relativement large sur la surface supérieure de l'une des deux feuilles de film pour tube et sur la surface inférieure de l'autre des deux feuilles de film pour tube, un bord latéral de chacune des feuilles de film pour coussin d'air étant aligné avec un bord latéral de chacune des feuilles de film pour tube,
c) plusieurs moules (6, 7, 8)
caractérisé en ce que
i) un premier moule (6) est disposé à un emplacement intermédiaire du passage de fourniture des feuilles de film pour tube (f1, f2), emplacement intermédiaire au niveau duquel les feuilles de film pour tube ne rejoignent pas les feuilles de film pour coussin d'air (F1, F2), pour former par l'intermédiaire d'une opération de scellage à chaud, dans le tube de soufflage d'air (16) constitué par les feuilles de film pour tube (f1, f2), un passage d'air principal (28) s'étendant en continu à travers les plusieurs coussins d'air (15), et des vannes auto-scellables (21, 23, 25, 27) disposées entre le passage d'air principal (28) et les coussins d'air individuels (15),
ii) un second moule (7) est disposé le long du passage de fourniture dans lequel les feuilles de film pour tube (f1, f2) et les feuilles de film pour coussin d'air (F1, F2) sont réunies et sont fournies, pour fixer, par l'intermédiaire d'une opération de scellage à chaud, les bord latéraux opposés correspondants de chacune des feuilles de film pour coussin d'air dans la direction longitudinale, et
iii) un troisième moule (8) est disposé en aval du second moule (7) pour fixer, par l'intermédiaire d'une opération de scellage à chaud, les feuilles de film pour coussin d'air dans la direction transversale selon des intervalles prédéterminés le long de la direction longitudinale, et en ce que
d) des moyens sont agencés entre les moyens pour fournir les feuilles de film pour tube (f1, f2) et le premier moule (6), pour appliquer une peinture non-soudable sur la surface intérieure d'au moins une des feuilles de film pour tube (f1, f2) en correspondance au passage d'air principal (28), de sorte que le passage d'air principal (28) n'est pas bloqué par une opération de chauffage sous pression du troisième moule.

3. Dispositif selon la revendication 1 ou 2, caractérisé en ce que lesdites vannes auto-scellables (21, 23, 25, 27) sont formées par une configuration de joints à chaud comportant plusieurs saillies agencées parallèlement les unes aux autres et ayant une partie de communication discontinue, et dans lequel la configuration de joint à chaud est formée par :
un premier moule (6) ayant plusieurs saillies de chauffage continu agencées parallèlement les unes aux autres, et des moyens pour appliquer une couche de peinture non-soudable sur la surface intérieure de l'une des feuilles du film pour tube au niveau de zones correspondant auxdites plusieurs saillies, de sorte que les couches s'étendent à travers les zones dans la direction transversale.

4. Dispositif selon la revendication 1, caractérisé en ce que ladite feuille non-soudable (T1, T2) est formée de Téflon.

5. Dispositif selon la revendication 1, caractérisé en ce que ledit film pour tube (f1, f2) est constitué de polyéthylène, et ledit film pour coussin d'air (F1, F2) est constitué d'un film stratifié constitué de Nylon et de polyéthylène.
